# EUROPEAN PATENT SPECIFICATION

(11) **EP 4 425 667 B1**
(45) Date of publication and mention of the grant of the patent: **05.08.2026**
(21) Application number: 23816237.4
(22) Date of filing: 04.05.2023
(51) Int. Cl.: H01M 50/251, H01M 50/289, H01M 50/244, H01M 50/24, H01M 50/204, H01M 50/209

(54) **BATTERY CONTAINER AND ENERGY STORAGE SYSTEM INCLUDING THE SAME**
BATTERIEBEHÄLTER UND ENERGIESPEICHERSYSTEM DAMIT
BAC DE BATTERIE ET SYSTÈME DE STOCKAGE D'ÉNERGIE COMPRENANT CELUI-CI

(30) Priority: 03.06.2022 KR 20220068539
(43) Date of publication of application: 04.09.2024
(73) Proprietor: LG Energy Solution, Ltd., Seoul 07335 (KR)
(72) Inventor: CHOI, Byung-Hyuk, Daejeon 34122 (KR); PARK, Jung-Beom, Daejeon 34122 (KR); MUN, Jeong-O, Daejeon 34122 (KR); LEE, Seung-Jun, Daejeon 34122 (KR); CHO, Tae-Shin, Daejeon 34122 (KR)
(74) Representative: Plasseraud IP
(86) International application number: PCT/KR2023/006114
(87) International publication number: WO 2023/234573

(56) References cited:
- EP-A1- 3 972 005
- CN-A- 110 127 253
- CN-U- 212 934 776
- CN-U- 212 934 776
- KR-A- 20170 082 817
- KR-A- 20190 078 386
- KR-A- 20220 001 228
- KR-A- 20220 001 228
- US-A1- 2020 411 816

## Description

### TECHNICAL FIELD

The present application claims priority to Korean Patent Application No. 10-2022-0068539 filed on June 3, 2022 in the Republic of Korea.

The present disclosure relates to a battery, and more specifically, to a battery container configured to store energy by accommodating a plurality of battery modules in a container-shaped housing, and an energy storage system including the same.

### BACKGROUND ART

Recently, as issues such as power shortage or eco-friendly energy have emerged, an energy storage system (ESS) for storing generated power has been attracting much attention. Representatively, when such an ESS is used, it is easy to construct a power management system such as a smart grid system, and it is possible to easily control power supply and demand in a specific region or city. In addition, as commercialization of electric vehicles is in full swing, such an ESS can be applied to electric charging stations capable of charging electric vehicles.

The ESS may be configured in various forms, but may be typically configured to include at least one battery container. At this time, the battery container may include a plurality of battery modules connected in series and/or parallel to each other (see CN 212934776 U). Here, the plurality of battery modules may be stored inside the battery container through a rack frame or a separate fixing structure.

The battery container used in the ESS often contains a large number of battery modules therein to increase capacity or output. Moreover, in order to increase the energy density of the battery container, a plurality of battery modules may exist close together.

However, if a plurality of battery modules are crowded together in a small space as above, they may be vulnerable to accidents such as fire or explosion. In particular, if an event such as a fire occurs in one battery module due to thermal runaway or the like, the fire may spread to other battery modules included within the battery container. In this case, the entire battery container may be damaged to be unusable. In addition, the fire in the battery container not only causes material damage to the battery container, but may also cause human damage to nearby workers and users. In addition, unavailability of the battery container included in the ESS may cause unexpected damage to homes or factories that receive power from the ESS. In addition, because the ESS may include a plurality of battery containers, a fire in a specific battery container may spread to other battery containers and cause greater damage.

To prevent such problems, various conventional technologies have been proposed or applied. A representative example is a watering system that sprays or supplies a fire extinguishing liquid, especially water, to the entire interior of the battery container or to a specific battery module when a fire occurs in the battery container. However, in order to apply the watering system to a battery container, various problems arise. For example, the internal structure of the battery container becomes complicated, energy density decreases, and cost increases. Moreover, in the case of a fire protection system that sprays water inside the battery container, for example at the upper portion of the battery container, the entire portion of the battery container may become unusable. In addition, the water sprayed directly to the battery module and used to extinguish fire may cause environmental problems as contaminated water. Therefore, the resulting economic or social damage may increase.

### DISCLOSURE

### Technical Problem

The present disclosure is designed to solve the problems of the related art, and therefore the present disclosure is directed to providing a battery container, which may effectively prevent the spread of fire, and an energy storage system including the same.

However, the technical problem to be solved by the present disclosure is not limited to the above, and other problems not mentioned herein will be clearly understood by those skilled in the art from the following disclosure.

### Technical Solution

In one aspect of the present disclosure, there is provided a battery container, comprising: a container housing having an empty space formed therein; a plurality of battery modules accommodated in the inner space of the container housing and stacked in an upper and lower direction to form a module stack, so that a plurality of module stacks are arranged in a horizontal direction; and a blocking barrier interposed between at least some module stacks among the plurality of module stacks and configured to separate the space between the module stacks.

Here, the blocking barrier may have an upper end fixed to an upper side of the container housing and a lower end fixed to a lower side of the container housing.

In addition, the blocking barrier may have a plate portion disposed to be erect between two adjacent module stacks so that both surfaces face different module stacks.

In addition, the plate portion may include two plates spaced apart from each other.

In addition, the blocking barrier may have a first pillar portion that supports the plate portion.

In addition, the blocking barrier may have a first seating portion configured to support the battery module.

In addition, two or more blocking barriers may be included, and the battery container may further include a support wall provided between two blocking barriers and configured to support the battery module together with the blocking barriers.

In addition, a front end and a rear end of the blocking barrier may be in contact with a front inner surface and a rear inner surface of the container housing, respectively.

In addition, the blocking barrier may have an inclined surface that is inclined toward the module stack as moving outward in a front and rear direction.

In another aspect of the present disclosure, there is also provided an energy storage system, comprising the battery container according to the present disclosure.

### Advantageous Effects

According to an embodiment of the present disclosure, the safety of the battery container may be improved.

In particular, according to an embodiment of the present disclosure, the spread of fire between a plurality of battery modules inside the battery container may be effectively prevented or suppressed.

Moreover, according to an embodiment of the present disclosure, a relatively simple structure may be provided to effectively prevent the spread of fire. Therefore, in this case, the manufacturing cost of the battery container may be reduced, quality reliability may be secured, and productivity may be increased.

In addition, according to an embodiment of the present disclosure, by lowering the weight of the battery container, the battery container may be easily transported, and an energy storage system using the battery container may be easily installed.

In particular, according to an embodiment of the present disclosure, even if a watering system or fire suppression system (FSS) for preventing the spread of fire is not included in the battery container, the spread of fire may be effectively suppressed or delayed.

Therefore, it is possible to prevent problems such as structural complexity or increased weight or cost due to the watering system or fire suppression system. In addition, according to an embodiment of the present disclosure, it is possible to prevent the problem that environmental pollution is caused since the water sprayed directly to a battery module where a fire occurs is discharged.

In addition, several other additional effects may be achieved by various embodiments of the present disclosure. Various effects of the present disclosure will be described in detail in each embodiment, or the effects that can be easily understood by those skilled in the art will be not be described in detail.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view schematically showing a partial configuration of a battery container according to an embodiment of the present disclosure.
FIG. 2 is a perspective view schematically showing the configuration in which the battery module is removed in the embodiment of FIG. 1.
FIG. 3 is an enlarged view showing a partial configuration of the battery container according to an embodiment of the present disclosure.
FIG. 4 is an exploded perspective view showing the configuration of FIG. 3.
FIG. 5 is a cross-sectional view, taken along line C1-C1' in FIG. 3.
FIG. 6 is an exploded perspective view showing a partial configuration of a battery container according to another embodiment of the present disclosure.
FIG. 7 is a cross-sectional view schematically showing a partial configuration of a battery container according to still another embodiment of the present disclosure.
FIG. 8 is a perspective view schematically showing the configuration of a first seating portion according to an embodiment of the present disclosure.
FIG. 9 is a perspective view schematically showing another partial configuration of the battery module according to an embodiment of the present disclosure.
FIG. 10 is an exploded perspective view showing the configuration of FIG. 9.
FIG. 11 is a top cross-sectional view schematically showing a partial configuration of the battery module according to an embodiment of the present disclosure, as viewed from the above.
FIG. 12 is a top cross-sectional view schematically showing a partial configuration of a battery module according to another embodiment of the present disclosure, as viewed from the above.
FIG. 13 is an enlarged view of the portion J1 in FIG. 12.
FIG. 14 is a perspective view schematically showing a partial configuration of a blocking barrier according to still another embodiment of the present disclosure.
FIG. 15 is a perspective view schematically showing a partial configuration of a blocking barrier according to still another embodiment of the present disclosure.
FIG. 16 is an exploded perspective view schematically showing the configuration of a battery container according to still another embodiment of the present disclosure.
FIG. 17 is a diagram schematically showing a partial configuration of a battery container according to still another embodiment of the present disclosure.
FIG. 18 is a diagram schematically showing a partial configuration of a support member according to still another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

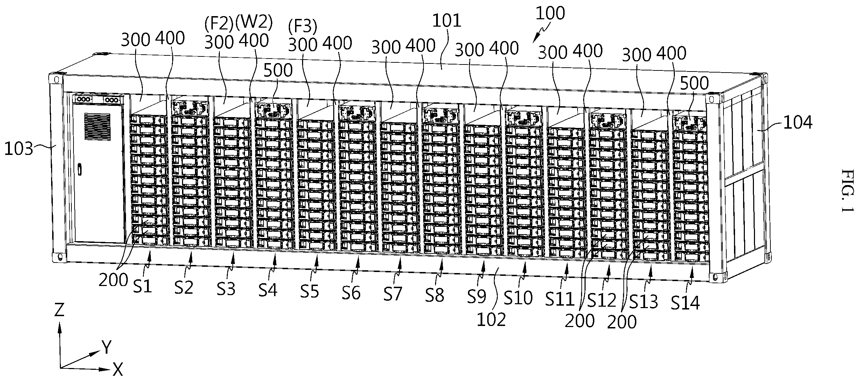

FIG. 1 is a perspective view schematically showing a partial configuration of a battery container according to an embodiment of the present disclosure.

Referring to FIG. 1, the battery container according to the present disclosure includes a container housing 100, a battery module 200, and a blocking barrier 300.

The container housing 100 may have an empty space formed therein. More specifically, the container housing 100 may have six plates, namely an upper plate 101, a lower plate 102, a left plate 103, a right plate 104, a front plate (not shown), and a rear plate (not shown), to form an inner space. In particular, the container housing 100 may be formed in a substantially rectangular parallelepiped shape.

For example, in the embodiment of FIG. 1, the container housing 100 is shown to include an upper plate 101, a lower plate 102, a left plate 103, and a right plate 104. Here, the container housing 100 may further include a front plate and a rear plate, but in FIG. 1, the front plate and the rear plate are not depicted to show internal components more clearly. In addition, the front plate and the rear plate may include at least one door to open the inner space of the container housing 100, or may be configured entirely in the form of a door. In addition, the plurality of plates constituting the container housing 100 uses the term 'plate', but is not limited to having a completely flat surface. That is, the various surfaces that constitute the container housing 100 may have a partially bent or curved shape, or may have a reinforcing structure such as a rib or padding structure. For example, a reinforcing member may be provided at the corner or central portion of the container housing 100.

The container housing 100 is an exterior of the battery container and may be made of a material and structure with high rigidity to protect various components stored in the inner space, especially the battery module 200. For example, the container housing 100 may be made of a metal material such as steel.

However, the present disclosure is not necessarily limited to a specific form or material of the container, and various container housings 100 known at the time of filing of this application may be employed in the present disclosure.

The battery module 200 may be stored in the inner space of the container housing 100. In particular, a plurality of battery modules 200 may be included in the battery container to increase capacity and/or output. In addition, the plurality of battery modules 200 may be electrically connected in series and/or parallel through connection members such as bus bars or cables.

At least some of the plurality of battery modules 200 may be stacked in the upper and lower direction to form a module stack. In other words, the module stack may be regarded as a configuration formed by stacking two or more battery modules 200 in the upper and lower direction (Z-axis direction in the drawing). For example, thirteen battery modules 200 may be stacked in the upper and lower direction to form one module stack.

In addition, a plurality of module stacks may be arranged in the horizontal direction. In other words, the plurality of battery modules 200 may be divided into several groups, and a separate module stack may be formed for each group. Also, the plurality of module stacks may be arranged in the horizontal direction. For example, referring to FIG. 1, the battery container may include fourteen module stacks S1 to S14, and the fourteen module stacks S1 to S14 may be arranged to be spaced apart by a predetermined distance in the left and right direction (X-axis direction in the drawing). At this time, each module stack S1 to S14 may include thirteen battery modules 200. However, the number of stacked battery modules 200 or the number of module stacks S1 to S14 arranged in the horizontal direction may be set in various ways depending on various conditions or situations, such as the specifications or installation purpose of the battery container, specifications, characteristics or type of the battery module 200, etc.

The blocking barrier 300 may be interposed between at least some module stacks among the plurality of module stacks. For example, referring to FIG. 1, fourteen module stacks S1 to S14 are arranged from left to right, and a blocking barrier 300 may be interposed as indicated by F2 between the second stack S2, which is the second module stack from the left side, and the third stack S3, which is the third module stack from the left side. In addition, the blocking barrier 300 may also be interposed in the space between other module stacks, such as between the fourth stack S4, which is the fourth module stack from the left side, and the fifth stack S5, which is the fifth module stack, as indicated by F3.

In addition, the blocking barrier 300 may be interposed between adjacent module stacks to separate the space between the adjacent module stacks. For example, in the embodiment of FIG. 1, the blocking barrier 300 (F2) may be configured to separate the space between the second stack S2 and the third stack S3, which are adjacent to each other.

In particular, the blocking barrier 300 may be configured to prevent flame from spreading in the space between adjacent module stacks. For example, the blocking barrier 300 (F2) interposed between the second stack S2 and the third stack S3 may be configured to separate the space where the second stack S2 is stored and the space where the third stack S3 is stored, so that fire does not pass over between the two spaces.

The blocking barrier 300 may be made of a material with a high melting point and high strength so that it may sufficiently withstand flame or high temperatures. For example, the blocking barrier 300 may include a metal material, such as a steel material.

According to this embodiment of the present disclosure, even if a fire occurs in a specific module stack, it is possible to effectively prevent the fire from spreading to other adjacent module stacks. For example, even if a fire occurs in the second stack S2 in the embodiment of FIG. 1, the spread of fire between module stacks may be prevented by preventing the flame from moving toward the third stack S3. Therefore, even if a separate watering system or a fire suppression system is not included, the spread of fire between module stacks included in the battery container may be effectively prevented.

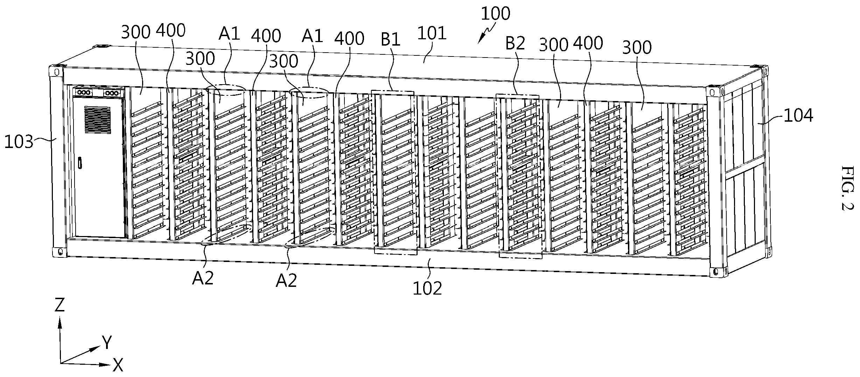

The blocking barrier 300 may have an end fixed to the inner surface of the container housing 100. This will be described in more detail with reference to FIG. 2.

FIG. 2 is a perspective view schematically showing the configuration in which the battery module 200 is removed in the embodiment of FIG. 1.

Referring to FIG. 2, the upper end of the blocking barrier 300 may be coupled and fixed to the upper surface among the inner surfaces of the container housing 100, as indicated by A1. In addition, the lower end of the blocking barrier 300 may be coupled and fixed to the lower surface among the inner surfaces of the container housing 100, as indicated by A2.

According to this embodiment of the present disclosure, the blocking barrier 300 may reduce or eliminate an empty gap between the blocking barrier 300 and the inner surface of the container housing 100 by contacting the upper surface (upper inner surface) and the lower surface (lower inner surface) of the container housing 100 therebetween. Therefore, the flame blocking performance by the blocking barrier 300 may be further improved.

In addition, according to this embodiment, since the blocking barrier 300 may support the upper plate 101 and the lower plate 102 of the container housing 100, the structural rigidity of the blocking barrier 300 may be improved. In particular, in this embodiment, the upper plate 101 of the container housing 100 may be prevented from sagging or deforming downward.

Here, the coupling and fixation method between the blocking barrier 300 and the container housing 100 may be implemented in various forms. For example, the blocking barrier 300 and the container housing 100 may be configured to be at least partially integrated with each other. In this case, at least a part of the blocking barrier 300 and the container housing 100 are made of the same material and may be manufactured in an integrated form from the beginning so that they are inseparable. Alternatively, the blocking barrier 300 and the container housing 100 may be fastened in various other ways, such as bolting, welding, or fitting.

In particular, the blocking barrier 300 may be configured so that a portion in contact with the inner surface of the container housing 100, namely the contact surface, is elongated. For example, the upper end of the blocking barrier 300 may be in contact with the upper inner surface (upper surface) of the container housing 100, and the contact portion may be elongated in the front and rear direction (Y-axis direction in the drawing). Moreover, the upper end of the blocking barrier 300 may continuously contact the upper surface of the container housing 100 in the Y-axis direction from the front end to the rear end. In addition, the lower end of the blocking barrier 300 may be in contact with the lower inner surface (lower surface) of the container housing 100. Also, the lower contact portion may also be elongated in the front and rear direction. Moreover, the lower end of the blocking barrier 300 may continuously contact the lower surface of the container housing 100 in the Y-axis direction from the front end to the rear end.

According to this embodiment of the present disclosure, the gap between the blocking barrier 300 and the container housing 100 may be reduced or eliminated. Therefore, when a fire occurs in a specific module stack, the flame moves to the gap between the blocking barrier 300 and the container housing 100, thereby more reliably preventing the fire from spreading to other module stacks. In addition, according to this embodiment, it is possible to prevent high-temperature venting gas or the like from moving into the gap between the blocking barrier 300 and the container housing 100. Therefore, it is possible to prevent the high temperature venting gas or the like from damaging other module stacks, transferring thermal runaway, or causing fire. In addition, according to this embodiment, the support force of the blocking barrier 300 with respect to the container housing 100 may be improved. Therefore, the structural strength of the battery container may be further improved.

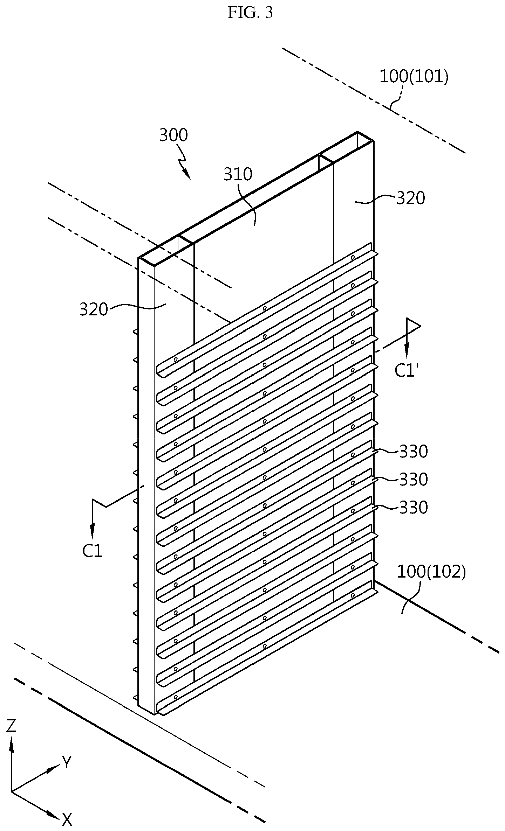

FIG. 3 is an enlarged view showing a partial configuration of the battery container according to an embodiment of the present disclosure. For example, FIG. 3 may be regarded as an enlarged view showing the portion B1 of FIG. 2. In particular, in FIG. 3, some components are shown in transparent form to show the configuration more clearly. In other drawings below, if necessary, some components are shown in transparent form.

Referring to FIGS. 1 to 3, the blocking barrier 300 may include a plate portion 310. The plate portion 310 has an approximately plate shape and may have two flat surfaces at both sides. In addition, the plate portion 310 may be disposed between two adjacent module stacks so that both surfaces face different module stacks. For example, when module stacks are located at the left and right sides of the blocking barrier 300, both surfaces of the plate portion 310 may be located at the left and right sides. Accordingly, the left surface of the plate portion 310 may face the left module stack, and the right surface of the plate portion 310 may face the right module stack.

Meanwhile, the plate portion 310 may have an overall plate shape. However, the present disclosure is not necessarily limited to this form. For example, the plate portion 310 may have a partially curved surface or may be configured to have irregularities, protrusions, or the like.

According to this embodiment of the present disclosure, effective flame blocking may be provided between module stacks by the blocking barrier 300 without increasing the volume and weight of the battery container. In particular, according to this embodiment, since the blocking barrier 300 is not formed to have a great thickness in the horizontal arrangement direction of the module stacks, it is possible to effectively suppress the flame or gas from being transferred while narrowing the gap between the module stacks.

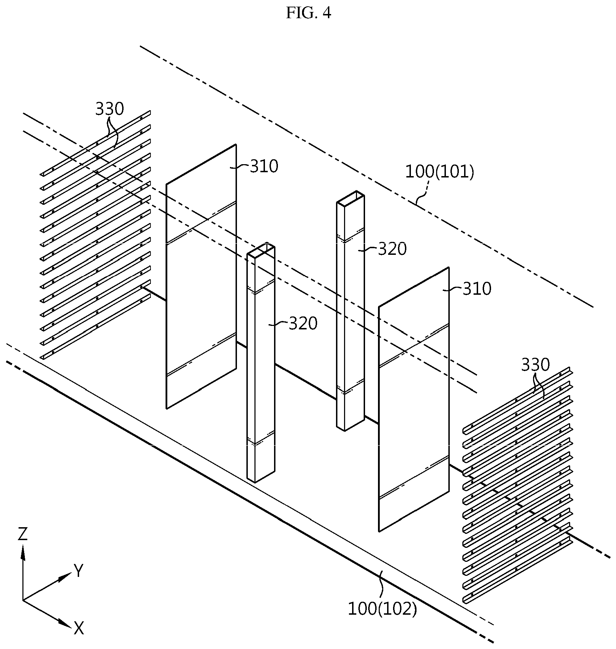

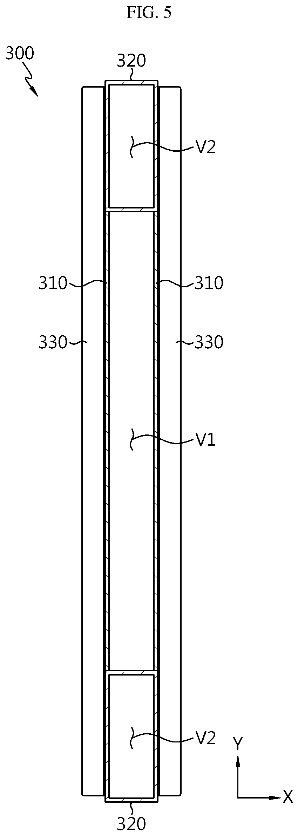

In the blocking barrier 300 of the battery container according to the present disclosure, the plate portion 310 may include two plates. This will be described in more detail with further reference to FIGS. 4 and 5.

FIG. 4 is an exploded perspective view showing the configuration of FIG. 3, and FIG. 5 is a cross-sectional view, taken along line C1-C1' in FIG. 3.

Referring to FIGS. 4 and 5, each blocking barrier 300 may include two plate portions 310. The two plate portions 310 may be arranged to face each other in the horizontal direction (X-axis direction) along which a plurality of module stacks are arranged. Moreover, the two plate portions 310 may be spaced apart from each other by a predetermined distance. That is, the two plate portions 310 may be spaced apart from each other by a predetermined distance in the X-axis direction. Accordingly, an empty space as indicated by V1 in the drawing may be formed between the two plate portions 310.

According to this embodiment of the present disclosure, the two plate portions 310 may form a flame blocking space doubly by configuring different portions of the barrier. In addition, since the two plate portions 310 are not integrated, heat transfer between the two plate portions 310 may be suppressed. Moreover, when the two plate portions 310 are spaced apart from each other and an empty space is formed therebetween, the insulation effect between the two plate portions 310 may be further improved due to an air layer. Moreover, by lowering the weight of each blocking barrier 300, the overall weight of the battery container 300 may be reduced. Therefore, it may be more advantageous for transportation or installation of the battery container.

In addition, according to this embodiment, the deformation of the plate portion 310 may be absorbed due to the empty space formed between the two plate portions 310. In particular, if gas or fire occurs in a specific module stack, the internal pressure may increase in the space in which the corresponding module stack is accommodated. Also, due to the increase in internal pressure, pressure may be applied to the plate portion 310 directly facing the corresponding module stack. At this time, the corresponding plate portion 310 may be pushed to a portion where an empty space as indicated by V1 in FIG. 5 is formed. Therefore, even if any plate portion 310 is deformed due to pressure application, the position of the entire blocking barrier 300 may be maintained as it is. In addition, other plate portions 310 provided in the blocking barrier 300 may not be damaged or deformed. That is, the empty space between the two plate portions 310 may serve as a space that buffers the deformation of the plate portion 310 due to an increase in internal pressure.

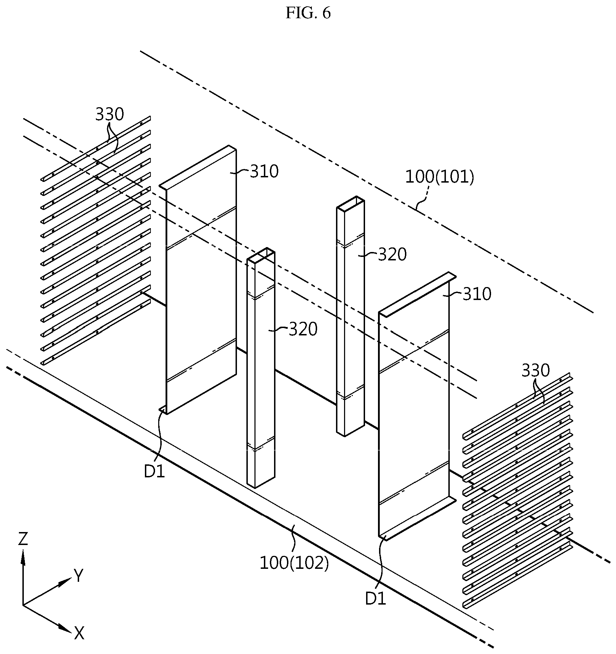

FIG. 6 is an exploded perspective view showing a partial configuration of a battery container according to another embodiment of the present disclosure. Moreover, FIG. 6 may be regarded as a modified example of the blocking barrier 300, particularly the plate portion 310, in the embodiment of FIG. 4. For various embodiments included in this specification, including this embodiment, features identical or similar to those of other embodiments will not be described in detail, and different features will be described in detail.

Referring to FIG. 6, the plate portion 310 of the blocking barrier 300 may be configured to have a bent end, as indicated by D1. For example, the plate portion 310 may be configured to have a bent lower end. Also, the lower bent end may contact the lower inner surface, namely the bottom, of the container housing 100. Moreover, the lower surface of the lower bent end of the plate portion 310 may be fixed in contact with the bottom of the container housing 100. In addition, the upper end of the plate portion 310 may also be configured in a bent shape. In this case, the upper bent end of the plate portion 310 may be fixed in contact with the upper inner surface, namely the ceiling surface, of the container housing 100.

According to this embodiment of the present disclosure, the sealing force between the plate portion 310 and the container housing 100 may be further improved due to the upper end and/or the lower bent end formed at the plate portion 310. Therefore, it is possible to more reliably prevent flame or gas from leaking through the gap between the plate portion 310 and the container housing 100. In addition, according to this embodiment, the contact area between the plate portion 310 and the container housing 100 increases, so that the support force of the plate portion 310 to the container housing 100 may be further increased.

Moreover, as in the former embodiment, when two plate portions 310 are provided in one blocking barrier 300, the bending direction of the end of each plate portion 310 may be outward. For example, if the blocking barrier 300 has two plates (left plate and right plate), the upper end and the lower end of the left plate may be bent in the left direction, and the upper end and the lower end of the right plate may be bent in the right direction. In this case, the gap between the ends of the two plates and the container housing 100 may be formed longer. Therefore, the sealing performance according to the bent shape may be further increased.

In addition, according to this embodiment, one blocking barrier 300 may have a space in which various components may be accommodated between two plate portions 310. For example, the blocking barrier 300 may contain a fire extinguishing agent for extinguishing a fire in the empty space V1 between the two plate portions 310. As the extinguishing agent, various fire extinguishing substances known at the time of filing of this application may be employed. In this case, when a fire occurs in a specific module stack, the fire extinguishing agent may be used to extinguish the fire in the specific module stack or prevent the fire from spreading to other adjacent module stacks.

In addition, the blocking barrier 300 may be configured so that, when a fire occurs in a specific module stack, the fire extinguishing agent exists only in the empty space V1 between the two plate portions 310 or flows out from the space and leaks toward the module stack. At this time, a hole through which the extinguishing agent may leak may be formed in a portion of the blocking barrier 300, for example the plate portion 310.

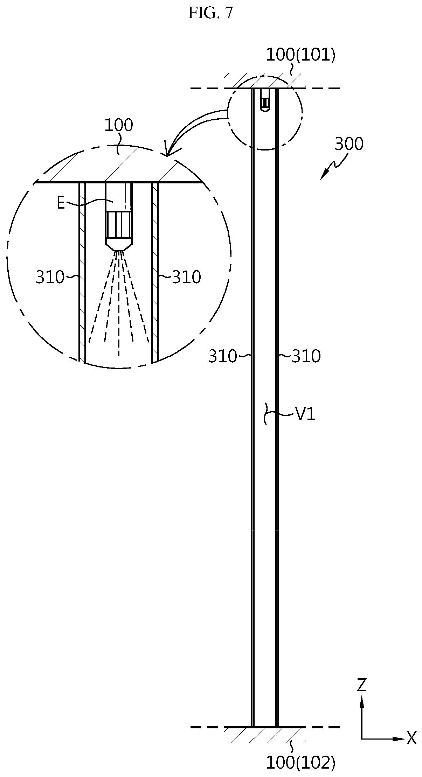

FIG. 7 is a cross-sectional view schematically showing a partial configuration of a battery container according to still another embodiment of the present disclosure.

Referring to FIG. 7, the battery container according to the present disclosure may further include a fire extinguishing liquid supply module. In particular, the fire extinguishing liquid supply module may include a fire extinguishing nozzle inside the blocking barrier 300, as indicated by E. Moreover, the fire extinguishing nozzle E may be configured to spray a fire extinguishing liquid, such as water, into the space V1 between the two plate portions 310. Here, the fire extinguishing nozzle E may be located at the upper portion of the space V1 between the two plate portions 310 and spray a fire extinguishing liquid downward.

The fire extinguishing nozzle E may allow a fire extinguishing liquid to be supplied in case a fire occurs in an adjacent module stack. For example, the fire extinguishing nozzle E is configured in the form of a glass bulb, and may be broken when heat is applied by a flame or the like, so that water is sprayed. In addition, the fire extinguishing liquid supply module may include a fire sensor or a smoke sensor, detect fire through such a sensor, and spray a fire extinguishing liquid through the fire extinguishing nozzle E.

According to this embodiment of the present disclosure, when thermal runaway or fire occurs in a specific module stack, it is possible to prevent or reduce heat or flame directed to other module stacks beyond the blocking barrier 300. Therefore, it is possible to prevent or delay the spread of fire to the entire battery container. Moreover, in this embodiment, the fire extinguishing liquid, such as water, may be sprayed only inside the blocking barrier 300 and may not be sprayed to the battery module 200. In this case, it is possible to prevent normal use of the battery module 200 from being disabled or problems such as electric shock or short circuit from occurring by contacting the fire extinguishing liquid such as water.

In addition, the blocking barrier 300 may include a first pillar portion 320 for supporting the plate portion 310, as shown in FIGS. 3 to 5, or the like.

The first portion pillar 320 is configured in a bar shape elongated in the upper and lower direction, and the upper end and the lower end may be coupled with the container housing 100. For example, the upper end and the lower end of the first pillar portion 320 may be welded or bolted to the container housing 100. Alternatively, the first pillar portion 320 may be manufactured in an integrated form with the container housing 100 from the beginning.

The first pillar portion 320 may be in contact with or coupled to the plate portion 310 so that the plate portion 310 maintains its shape or position well. For example, the first pillar portion 320 may be welded or bolted to the plate portion 310. Moreover, two or more first pillar portions 320 may be included in one blocking barrier 300. For example, two first pillar portions 320 may be provided, as shown in FIGS. 4 and 5. In addition, the two first pillar portions 320 may be arranged to be spaced apart by a predetermined distance in a direction perpendicular to the arrangement direction of the module stacks in the horizontal direction, namely in the front and rear direction (Y-axis direction). At this time, the front end and the rear end of the plate portion 310 may be coupled and fixed to the two first pillar portions 320 arranged in the front and rear direction, respectively. Moreover, the plate portion 310 may be inserted between two first pillar portions 320, as shown in FIG. 5.

According to this embodiment of the present disclosure, the blocking barrier 300 may be installed more easily inside the container housing 100, and the shape and position of the plate portion 310 may be maintained more stably. In addition, according to this embodiment, there is a high possibility that both the flame blocking effect and the structural rigidity supplementation effect by the blocking barrier 300 will be improved. For example, in this embodiment, the blocking barrier 300 may be configured such that the plate portion 310 is made of a material with excellent flame blocking performance, such as a ceramic material, and the first pillar portion 320 is made of a material with high mechanical strength. Moreover, the plate portion 310 may be made of mica material.

The first pillar portion 320 may have an empty space formed therein, as indicated by V2 in FIG. 5. Moreover, since the first pillar portion 320 may be elongated in the upper and lower direction, the hollow V2 formed therein may also be formed to be elongated in the upper and lower direction. According to this embodiment of the present disclosure, the weight of the battery container may be further reduced and manufacturing costs may be reduced.

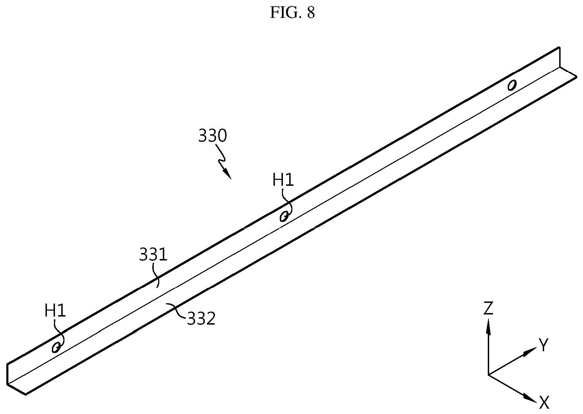

In addition, the blocking barrier 300 may include a first seating portion 330, as shown in FIGS. 3 to 6, or the like. The configuration of the first seating portion 330 will be described in more detail with further reference to FIG. 8.

FIG. 8 is a perspective view schematically showing the configuration of a first seating portion 330 according to an embodiment of the present disclosure.

Referring to FIG. 8 along with FIGS. 3 to 6, the first seating portion 330 may be configured to support each battery module 200 in the module stack. The first seating portion 330 may be expressed as a first seating frame or a first seating bracket in that it is configured in the form of a frame or bracket.

For example, the first seating portion 330 may be configured in the form of a plate elongated in one direction, for example in the front and rear direction (Y-axis direction). Moreover, as shown in FIG. 8, the first seating portion 330 may be configured to have a bent central portion, particularly bent at approximately 90°.

At this time, the first seating portion 330 may be regarded as having a vertical part 331 and a horizontal part 332 based on the bent portion. Here, the vertical part 331 and the horizontal part 332 are configured in a plate shape, respectively, but may have an integrated form.

Moreover, the vertical part 331 may be configured in the form of an erect plate and coupled to the first pillar portion 320 or the plate portion 310. For this purpose, the vertical part 331 may have a fastening hole as indicated by H1. In addition, the horizontal part 332 may be configured in a laid-down flat plate shape and support the battery module 200 on the upper surface.

The first seating portion 330 may support the side lower edge of the battery module 200. For example, the first seating portion 330 may support the left lower edge of the battery module 200. In this case, the right lower edge of the battery module 200 may be supported by another first seating portion 330, for example a first seating portion 330 included in another blocking barrier 300. That is, based on one battery module 200, two first seating portions 330 may support both sides of the battery module 200, especially the left lower end and the right lower end, respectively.

The module stack facing one blocking barrier 300 may include a plurality of battery modules 200 stacked in the upper and lower direction. Accordingly, the blocking barrier 300 may include a plurality of first seating portions 330 to support the plurality of battery modules 200 stacked in this way, respectively. Moreover, the first seating portion 330 may be provided in plurality along the stacking direction of the battery modules 200 to be spaced apart from each other in the upper and lower direction by a predetermined distance.

In addition, module stacks may be located at both sides of one blocking barrier 300. For example, different module stacks may be located at the left and right sides of one blocking barrier 300, respectively. Therefore, one blocking barrier 300 may include a plurality of first seating portions 330 at both left and right sides, respectively, to support the plurality of battery modules 200 located at both left and right sides, respectively, as shown in FIGS. 4 and 6, or the like.

According to this embodiment of the present disclosure, the battery module 200 may be supported by the blocking barrier 300. Therefore, there is no need to include a separate rack frame in the battery container to maintain the stacked state of the battery modules 200. Therefore, the manufacturing cost of the battery container may be reduced, and assembly and productivity may be improved. In addition, since the weight of the battery container is reduced, the battery container may be transported and installed more easily. In addition, since space occupied by the rack frame may be reduced and the battery modules may be stacked up to the ceiling of the battery container, it may be advantageous in reducing the size of the battery container and increasing energy density.

The battery container according to the present disclosure may include two or more blocking barriers 300, as shown in FIGS. 1 and 2. For example, the battery container may include seven blocking barriers 300, and the blocking barriers 300 may be arranged to be spaced by a predetermined distance apart in the left and right direction.

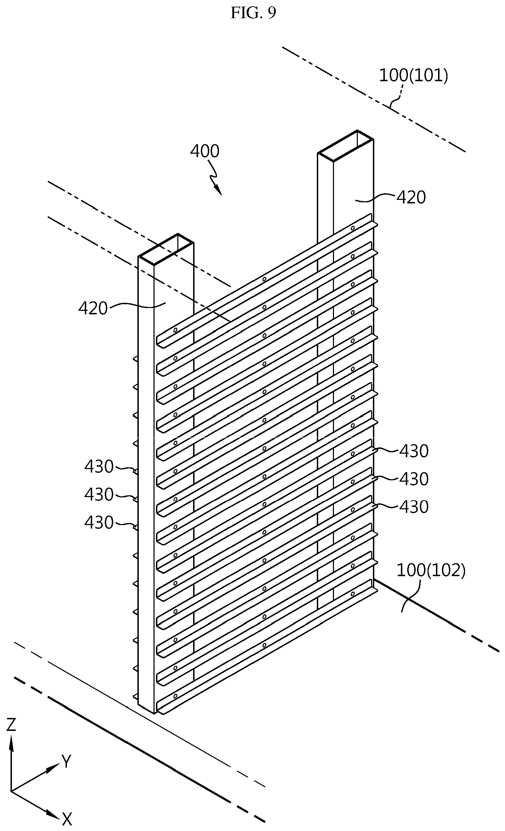

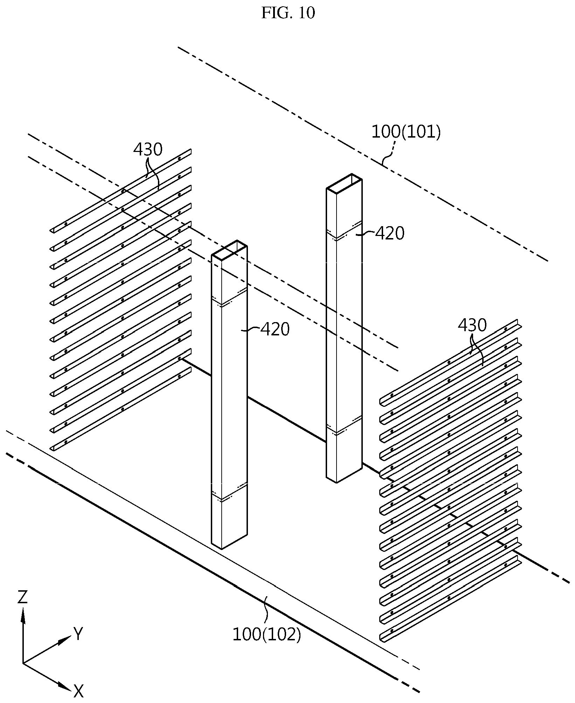

At this time, the battery container may further include a support wall 400. The support wall 400 may be provided between two blocking barriers 300. The configuration of the support wall 400 will be described in more detail with further reference to FIGS. 9 and 10.

FIG. 9 is a perspective view schematically showing another partial configuration of the battery module 200 according to an embodiment of the present disclosure. For example, FIG. 9 may be regarded as an enlarged view of the portion B2 of FIG. 2. Also, FIG. 10 is an exploded perspective view showing the configuration of FIG. 9.

Referring to FIGS. 9 and 10 along with FIGS. 1 and 2, the battery container may include a support wall 400 separately from the blocking barrier 300. Like the blocking barrier 300, the upper end and the lower end of this support wall 400 may be coupled to the inner upper surface and the inner lower surface of the container housing 100, respectively. Therefore, the support wall 400, together with the blocking barrier 300, may support the upper plate of the container housing 100 upward and supplement the structural rigidity of the container housing 100. In particular, the support wall 400 may be interposed between two blocking barriers 300. Moreover, as shown in FIGS. 1 and 2, a plurality of support walls 400 may be included in the battery container. At this time, the plurality of support walls 400 and the plurality of blocking barriers 300 may be arranged alternately in the horizontal direction.

In addition, the support wall 400 may be configured to accommodate and support the battery module 200 together with the blocking barrier 300. In particular, the support wall 400 may include a second pillar portion 420 and a second seating portion 430. The second pillar portion 420 and the second seating portion 430 of the support wall 400 may be configured identically or similarly to the first pillar portion 320 and the first seating portion 330 of the blocking barrier 300 described above. In particular, the second seating portion 430 may be coupled to the second pillar portion 420 by bolting or the like and may be provided in plurality in the upper and lower direction. Therefore, the plurality of battery modules 200 stacked in the upper and lower direction may be stably supported in the upper direction.

In particular, the support wall 400 may support different parts of the battery module 200 together with other blocking barriers 300. For example, seeing the embodiment of FIG. 1, the support wall 400 (W2) may support the left lower end of each battery module 200 included in the fourth stack S4 located at the right side upward through the second seating portion 430 located at the right side. At this time, the right lower end of each battery module 200 included in the fourth stack S4 may be supported upward through the first seating portion 330 provided at the left side of the blocking barrier 300, F3 located to be spaced by a predetermined distance to the right of the support wall 400 (W2). In addition, the support wall 400 (W2) may support the right lower end of each battery module 200 included in the third stack S3 located at the left side upward through the second seating portion 430 located at the left side. At this time, the left lower end of each battery module 200 included in the third stack S3 may be supported upward through the first seating portion 330 provided at the right side of the blocking barrier 300 (F2) located to be spaced by a predetermined distance to the left of the support wall 400 (W2). In this embodiment, it may be regarded that one end of the lower side of each battery module 200 is supported by the first seating portion 330 of the blocking barrier 300, and the other end of the lower side is supported by the second seating portion 430 of the support wall 400.

Meanwhile, unlike the blocking barrier 300, the support wall 400 may not have a configuration corresponding to the plate portion 310. In other words, the blocking barrier 300 may block the space at both sides through the plate portion 310, while the support wall 400 may not block the space at both sides since it does not have a configuration corresponding to the plate portion 310. That is, the support wall 400 may be configured to be at least partially open in the horizontal direction. In particular, the support wall 400 may be configured to allow air to circulate between both spaces. For example, in the embodiment of FIG. 1, when the third stack S3 and the fourth stack S4 are located at the left side and the right side, respectively, with the support wall 400 (W2) being interposed therebetween, air or the like may circulate between the space where the third stack S3 is located and the space where the fourth stack S4 is located.

According to this embodiment of the present disclosure, when two or more module stacks arranged in the horizontal direction are included as components of one battery system, each battery system may use one air conditioning module. For example, as in the embodiment shown in FIG. 1, when fourteen module stacks S1 to S14 are horizontally arranged in the left and right direction, two adjacent module stacks may configure one battery system. For example, the first stack S1 and the second stack S2 may configure one battery system, such as the first system. In addition, the third stack S3 and the fourth stack S4 may form another battery system, such as a second system. Also, the fifth stack S5 and the sixth stack S6 may configure a third system.

In this embodiment, the support wall 400 may be interposed between different module stacks included in one battery system to support the battery modules 200 located at both sides. In addition, the blocking barrier 300 may be interposed between module stacks included in different battery systems to support the battery modules 200 located at both sides.

For example, in the embodiment of FIG. 1, the third stack S3 and the fourth stack S4 are module stacks included together in the second system, which is one battery system, so W2, which is the support wall 400, may be interposed between them. Therefore, a cooling air may circulate between the third stack S3 and the fourth stack S4. Therefore, the cooling air supplied from one air conditioning module, such as an air conditioning unit (HVAC) located at the front door of the third stack S3, may be distributed to the space where the fourth stack S4 is located through the opening of the support wall 400 (W2).

Meanwhile, since the second stack S2 is included in the first system, which is a different battery system from the third stack S3, the blocking barrier 300 (F2), rather than the support wall 400, may be inserted between the second stack S2 and the third stack S3. At this time, the first system may have a separate air conditioning module independent of the second system.

According to this embodiment, integrated cooling control through one air conditioning module may be possible within the same battery system, even if different module stacks are included therein. In addition, according to this embodiment, air conditioning may be easily achieved within the same battery system, while flame transfer between different battery systems may be prevented. For example, even if a fire occurs in the third stack S3, the blocking barrier 300 F2 may prevent the flame from moving to the second stack S2. In addition, according to this embodiment, since the component corresponding to the plate portion 310 is not included in the support wall 400, the support wall 400 may have a lighter weight than the blocking barrier 300. Therefore, in this case, the weight of the battery container may be further reduced.

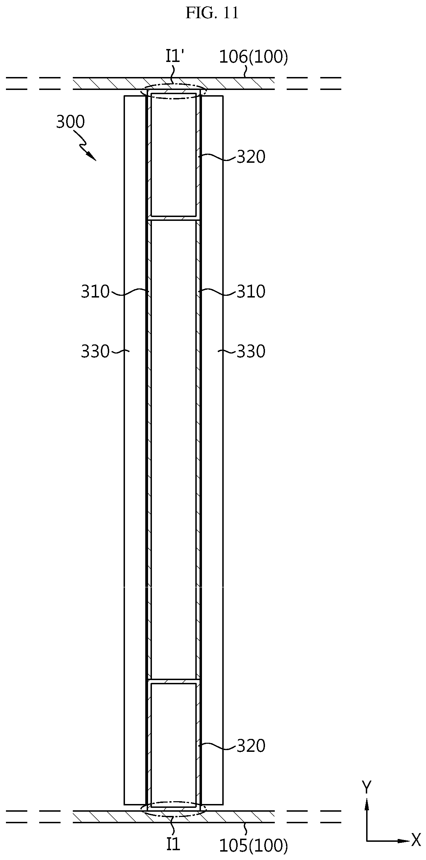

FIG. 11 is a top cross-sectional view schematically showing a partial configuration of the battery module 200 according to an embodiment of the present disclosure, as viewed from the above.

Referring to FIG. 11, the front end and the rear end of the blocking barrier 300 may be configured to contact the front inner surface and the rear inner surface of the container housing 100, respectively. For example, the container housing 100 may include a front plate 105 and a rear plate 106, as shown in FIG. 11, to close the front side and the rear side of the inner space. Moreover, the front plate 105 and/or the rear plate 106 may have a door to open or close the inner space. In addition, an air conditioning module may be installed in the front plate 105 and/or the rear plate 106 for air-conditioning of the container housing 100. For example, HVAC may be installed at the door provided to the front plate 105 of container housing 100.

In this embodiment, the front end of the blocking barrier 300 may contact the inner surface of the front plate 105 of the container housing 100, as indicated by I1 in FIG. 11. In particular, the contact portion between the front end of the blocking barrier 300 and the container housing 100 may be continuously elongated from the upper end to the lower end. In addition, the rear end of the blocking barrier 300 may contact the inner surface of the rear plate 106 of the container housing 100, as indicated by I1' in FIG. 11. In addition, the contact portion between the rear end of the blocking barrier 300 and the container housing 100 may also be continuously elongated from the upper end to the lower end. As a more specific example, the first pillar portion 320 may be located at the front end and the rear end of the blocking barrier 300. At this time, the front surface of the first pillar portion 320 located at the front end may contact the inner surface of the front plate 105.

According to this embodiment of the present disclosure, the flame blocking performance by the blocking barrier 300 may be further improved. In other words, according to this embodiment, it is possible to prevent flame or high-temperature venting gas from passing over to the front side or the rear side of the blocking barrier 300. Accordingly, the effect of preventing fire spread between module stacks arranged adjacently with the blocking barrier 300 interposed therebetween may be further improved.

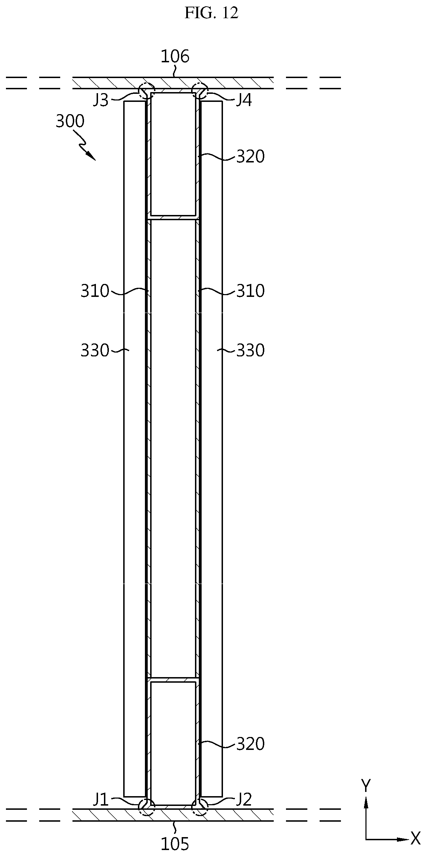

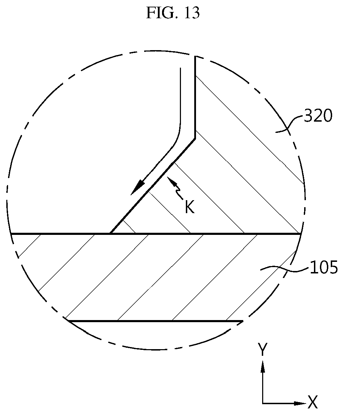

FIG. 12 is a top cross-sectional view schematically showing a partial configuration of a battery module according to another embodiment of the present disclosure, as viewed from the above. Also, FIG. 13 is an enlarged view of the portion J1 in FIG. 12.

First, referring to FIG. 12, the front end and the rear end of the blocking barrier 300 may have an inclined surface, as indicated by J1, J2, J3, and J4. In particular, the inclined surface may be configured to have an inward slope in the front and rear direction. Here, the inner direction may mean a direction in which the module stack is stored. For example, referring to FIG. 13, the left side of the front end of the blocking barrier 300, especially the left surface of the first pillar portion 320 at the front side, may have an inclined surface that is inclined to the left as moving toward the front side (-Y-axis direction), as indicated by K. In addition, in FIG. 12, the right surface of the first pillar portion 320 at the front side may have an inclined surface that is inclined to the right as moving toward the front side, as indicated by J2. In addition, in FIG. 12, the left surface of the first pillar portion 320 at the rear side may have an inclined surface that is inclined to the left as moving toward the rear side, as indicated by J3. Also, in FIG. 12, the right surface of the first pillar portion 320 at the rear side may have an inclined surface that is inclined to the right as moving toward the rear side, as indicated by J4. In particular, in this embodiment, the blocking barrier 300, especially the first pillar portion 320, may be regarded as having a portion in which the width gradually increases toward the outer side (front side or rear side).

According to this embodiment of the present disclosure, it is possible to more reliably prevent flame or gas from passing along the front end or the rear end of the blocking barrier 300 to other stacks. In particular, according to this embodiment, as indicated by the arrow in FIG. 13, flame or gas may be bent in an inner direction along the inclined surface K. Therefore, the flame or gas moving along the end of the blocking barrier 300 to other module stacks beyond the blocking barrier 300 may be more reliably blocked. In addition, according to this embodiment, the contact area between the blocking barrier 300 and the inner surface of the container housing 100 may be further expanded. Therefore, it is possible to more reliably prevent flame or gas from flowing into the gap between the blocking barrier 300 and the inner surface of the container housing 100.

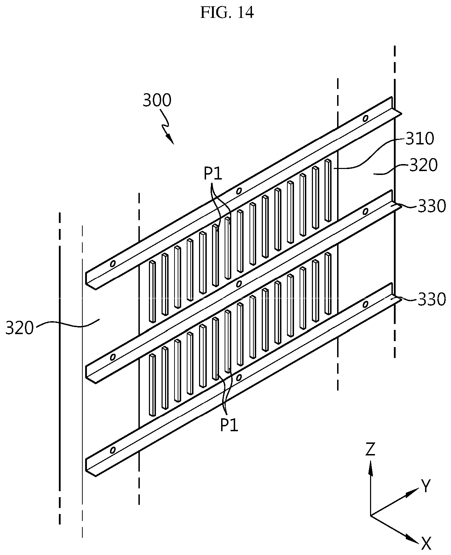

FIG. 14 is a perspective view schematically showing a partial configuration of a blocking barrier 300 according to still another embodiment of the present disclosure.

Referring to FIG. 14, irregularities may be formed on the plate portion 310 included in the blocking barrier 300. Here, the irregularities may be in the form of protrusions or grooves formed at the plate portion 310. More specifically, as indicated by P1 in FIG. 14, the plate portion 310 may have a protrusion elongated in the vertical direction (Z-axis direction). The protrusion P1 may be configured to protrude in the horizontal direction where the battery module 200 is located, for example in the left or right direction. Also, a plurality of protrusions P1 may be arranged in the front and rear direction (Y-axis direction) in the space between the two first seating portions 330 arranged adjacently in the upper and lower direction.

According to this embodiment of the present disclosure, when a flame is discharged from a specific battery module 200, the protrusion P1 provided on the plate portion 310 may effectively disturb the flame moving in the front and rear direction (Y-axis direction) along the surface of the plate portion 310. In particular, since the flame has a strong tendency to travel straightly, the forward and rearward movement of the flame may be suppressed by the plurality of protrusions P1, which are elongated in the vertical direction and arranged the front and rear direction. Therefore, in this case, the flame may be prevented from being discharged to the front or rear side of the battery container.

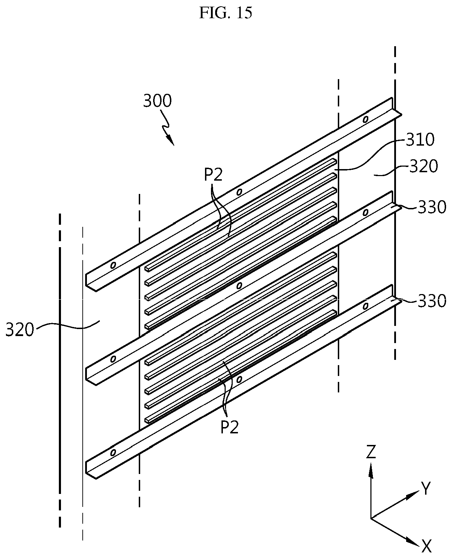

FIG. 15 is a perspective view schematically showing a partial configuration of a blocking barrier 300 according to still another embodiment of the present disclosure.

Referring to FIG. 15, the surface of the plate portion 310 included in the blocking barrier 300 may have a protrusion elongated in the front and rear direction (Y-axis direction), as indicated by P2. Also, a plurality of protrusions P2 may be arranged in the upper and lower direction in the space between the two first seating portions 330 arranged adjacent to each other in the upper and lower direction.

According to this embodiment of the present disclosure, when a flame is discharged from a specific battery module 200, the protrusion P2 provided in the plate portion 310 may disturb the flame moving in the upper and lower direction (Z-axis direction) along the surface of the plate portion 310. Accordingly, the movement of flame to other battery modules 200 stacked at the upper or lower side within the same module stack may be suppressed. Accordingly, the spread of fire between the battery modules 200 may be reduced or delayed.

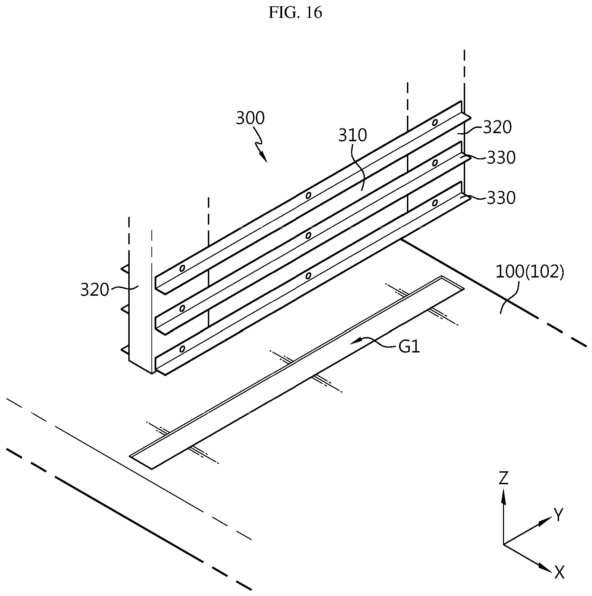

FIG. 16 is an exploded perspective view schematically showing the configuration of a battery container according to still another embodiment of the present disclosure. In particular, FIG. 16 may be regarded as showing the state before the lower portion of the blocking barrier 300 is coupled with the lower plate 102 of the container housing 100.

Referring to FIG. 16, an insert groove may be formed on the inner surface of the container housing 100, for example the upper surface (bottom) of the lower plate 102, as indicated by G1. Also, at least a part of the blocking barrier 300, for example the lower end, may be configured to be inserted into the insert groove G1. For this purpose, the insert groove G1 of the container housing 100 may have a shape corresponding to the lower end of the blocking barrier 300. In particular, the insert groove G1 of the container housing 100 may be elongated in the front and rear direction. In this case, the blocking barrier 300 may be inserted and fastened long along the insert groove G1 of the container housing 100.

Meanwhile, even though FIG. 16 shows only the lower portion of the container housing 100, the configuration for inserting the blocking barrier 300 may also be provided on the upper portion of the container housing 100.

According to this embodiment of the present disclosure, flame or gas leakage between the blocking barrier 300 and the container housing 100 may be more reliably prevented. For example, since the lower end of the blocking barrier 300 is inserted into the insert groove G1 formed at the lower plate 102 of the container housing 100, the flame outflow path between the lower end of the blocking barrier 300 and the lower plate 102 may be formed longer in a bent shape. Therefore, it is possible to prevent flame or the like from easily moving through the gap between the lower end of the blocking barrier 300 and the lower plate 102.

In addition, according to this embodiment, the blocking barrier 300 may be stably positioned inside the container housing 100. Also, due to this, the effect of supplementing the rigidity of the container housing 100 by the blocking barrier 300 may be further improved. In addition, according to this embodiment, since the installation position of the blocking barrier 300 is guided by the insert groove G1, the blocking barrier 300 may be installed more easily inside the container housing 100.

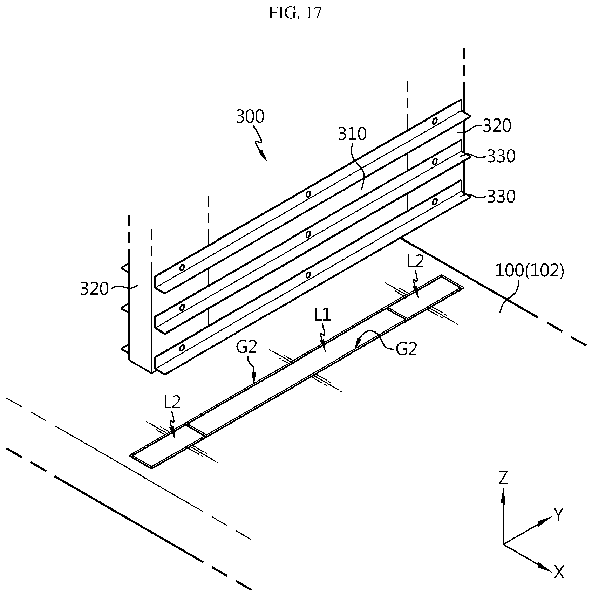

FIG. 17 is a diagram schematically showing a partial configuration of a battery container according to still another embodiment of the present disclosure. FIG. 17 may also be regarded as showing the state before the lower portion of the blocking barrier 300 is coupled with the lower plate 102 of the container housing 100.

Referring to FIG. 17, like the embodiment of FIG. 16, an insert groove as indicated by G2 may be formed on the inner surface of the container housing 100 so that a part of the blocking barrier 300 may be inserted. However, in the embodiment of FIG. 17, unlike the embodiment of FIG. 16, a first protruding portion and a second protruding portion, as indicated by L1 and L2, may be provided inside the insert groove G2.

In particular, the protruding portions L1, L2 provided inside the insert groove G2 may be configured to correspond to the shape of the end of the blocking barrier 300. For example, as indicated by V1 in FIG. 5, an empty space may be formed between two plates constituting the plate portion 310 in the blocking barrier 300. At this time, the first protruding portion L1 may be inserted into the empty space V1 between the two plate portions 310. Also, it may be regarded that the two plates are inserted into the insert groove G2 formed at the left side and the right side of the first protruding portion L1. In addition, as indicated by V2 in FIG. 5, an empty space may be formed at the center of the first pillar portion 320 in the blocking barrier 300. At this time, the second protruding portion L2 may be inserted into the hollow V2 of the first pillar portion 320. Also, the two first pillar portions 320 may be inserted into the insert groove G2 formed around the second protruding portion L2.

In this embodiment, the fastening force between the blocking barrier 300 and the container housing 100 may be further improved. In addition, according to this embodiment, the blocking barrier 300 and the container housing 100 are brought into closer contact, and the gap formed between the blocking barrier 300 and the container housing 100 may be bent several times. Therefore, it is possible to more effectively prevent fire or gas from leaking through the gap between the blocking barrier 300 and the container housing 100.

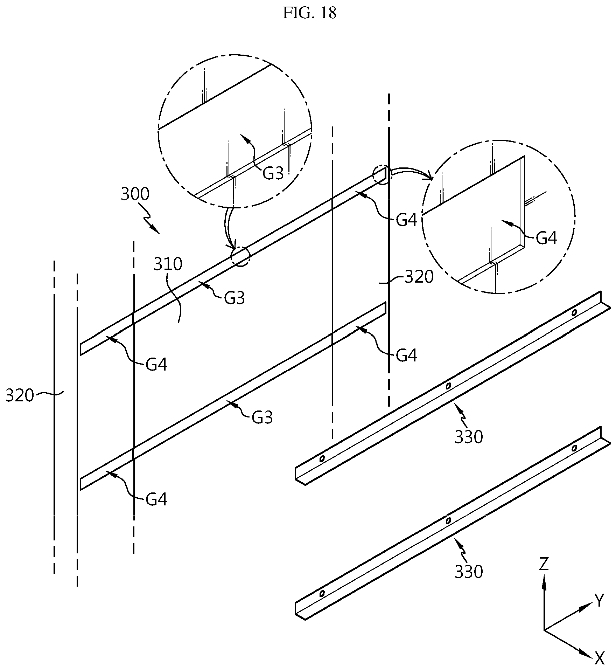

FIG. 18 is a diagram schematically showing a partial configuration of a support member according to still another embodiment of the present disclosure.

Referring to FIG. 18, an insert groove may be formed at the plate portion 310, as indicated by G3, so that at least a part of the first seating portion 330 is inserted. The insert groove G3 may be referred to as a third insert groove to distinguish from the former insert grooves G1, G2. For example, as shown in FIG. 18, the third insert groove G3 may be configured to be concave inward in the horizontal direction so that the central portion excluding both ends of the first seating portion 330 is inserted. In particular, when the plate portion 310 is formed at the left side and the right side of the blocking barrier 300, the third insert groove G3 of the right plate portion 310 may be formed to be concave leftward at the right surface, and the third insert groove G3 of the left plate portion 310 may be formed to be concave rightward at the left surface. Here, the third insert groove G3 may be formed by partially thinning the thickness of the plate portion 310 or bending a part of the plate portion 310.

In addition, an insert groove may be formed at the first pillar portion 320, as indicated by G4, so that a part of the first seating portion 330 is inserted. The insert groove G4 may be referred to as a fourth insert groove to distinguish from the former insert grooves G1 to G3. The fourth insert groove G4, together with the third insert groove G3, may form a groove into which the first seating portion 330 may be inserted. Moreover, the third insert groove G3 may be formed to be elongated in the front and rear direction (Y-axis direction) corresponding to the shape of the first seating portion 330, and the fourth insert groove G4 may be located at an end along the extension direction of the third insert groove G3.

In addition, as shown in FIG. 18, in one blocking barrier 300, two first pillar portions 320 may be arranged in the front and rear direction. In addition, the two first pillar portions 320 may be located at the front side and the rear side of the plate portion 310. Accordingly, in the first pillar portion 320 located at the front side of the plate portion 310, the fourth insert groove G4 may be formed to extend to the front end of the third insert groove G3. In addition, in the first pillar portion 320 located at the rear side of the plate portion 310, the fourth insert groove G4 may be formed to extend to the rear end of the third insert groove G3.

In particular, the first seating portion 330 may be coupled to the left surface and the right surface of each first pillar portion 320, respectively. Accordingly, the fourth insert groove G4 formed at the right side of the first pillar portion 320 at the front side may be formed concave with the right and rear sides open so that the front end of the first seating portion 330 may be inserted at the right side. In addition, the fourth insert groove G4 formed at the right side of the first pillar portion 320 at the rear side may be formed concave with the right and front sides open so that the rear end of the first seating portion 330 may be inserted. In addition, the fourth insert groove G4 formed at the left side of the first pillar portion 320 at the front side may be formed concave with the left and rear sides open so that the front end of the first seating portion 330 may be inserted at the left side. In addition, the fourth insert groove G4 formed at the left side of the first pillar portion 320 at the rear side may be formed concave with the left and front sides open so that the rear end of the first seating portion 330 may be inserted.

According to this embodiment of the present disclosure, the fixing force of the first seating portion 330 may be greatly improved. In particular, according to this embodiment, the first seating portion 330 may be stably supported upward by the third insert groove G3 and the fourth insert groove G4. In addition, according to this embodiment, the first seating portion 330 may be prevented from moving in the front and rear direction. In addition, according to this embodiment, the assembly position of the first seating portion 330 may be guided by the third insert groove G3 and the fourth insert groove G4. Therefore, in this case, the battery container may be assembled more easily.

Meanwhile, in the embodiment of FIG. 18, an embodiment in which an insert groove into which the first seating portion 330 may be inserted is formed at the blocking barrier 300 has been described, but an insert groove into which the second seating portion 430 may be inserted may also be formed at the support wall 400 in a similar form.

In addition to the components described above, the battery container may further include various other components known at the time of filing of this application. For example, the battery container may further include electrical components such as an AC/DC panel. In addition, the battery container may include one or more control modules 500, as shown in FIG. 1. The control module 500 may be configured to control charging and discharging operations of the battery module 200 included in the battery container or to exchange data with other components outside the battery container. In particular, if the battery container includes a plurality of battery systems, a plurality of control modules 500 may be provided. At this time, each battery system includes a separate control module 500, so that the battery system may be controlled independently.

An energy storage system according to the present disclosure includes the battery container according to the present disclosure described above. Moreover, the energy storage system according to the present disclosure may include two or more battery containers. In addition, the energy storage system according to the present disclosure may further include a control container for controlling various operations, such as charging and discharging operations of one or more battery containers, in addition to the battery container.

Meanwhile, in the present specification, the terms indicating directions such as "upper", "lower", "left", "right", "front", and "rear" may be used, but these terms are only for convenience of description, and it is obvious to those skilled in the art disclosure that these terms may vary depending on the location of a target object or the location of an observer. Also, in this specification, the terms such as "inside" or "outside" may be used for each component, and, unless otherwise specified, the "inside" may mean a direction toward the central portion in each component, and the "outside" may mean a direction opposite thereto.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### Reference Signs

100: container housing
101: upper plate, 102: lower plate, 103: left plate, 104: right plate, 105: front plate, 106: rear plate
200: battery module
300: blocking barrier
310: plate portion, 320: first pillar portion, 330: first seating portion
400: support wall
420: second pillar portion, 430: second seating portion
500: control module
S1 to S14: module stack

## Claims

1. A battery container, comprising:
a container housing (100) having an empty space formed therein;
a plurality of battery modules (200) accommodated in the inner space of the container housing and stacked in an upper and lower direction to form a module stack (S1-S14), so that a plurality of module stacks are arranged in a horizontal direction;
**characterized in that** the battery container comprises a blocking barrier (300) interposed between at least some module stacks among the plurality of module stacks and configured to separate the space between the module stacks.

2. The battery container according to claim 1,
wherein the blocking barrier has an upper end fixed to an upper side of the container housing and a lower end fixed to a lower side of the container housing.

3. The battery container according to claim 1,
wherein the blocking barrier has a plate portion disposed to be erect between two adjacent module stacks so that both surfaces face different module stacks.

4. The battery container according to claim 3,
wherein the plate portion includes two plates (310) spaced apart from each other.

5. The battery container according to claim 3,
wherein the blocking barrier has a first pillar portion (320) that supports the plate portion.

6. The battery container according to claim 1,
wherein the blocking barrier has a first seating portion (330) configured to support the battery module.

7. The battery container according to claim 1,
wherein two or more blocking barriers are included, and
the battery container further includes a support wall (400) provided between two blocking barriers and configured to support the battery module together with the blocking barriers.

8. The battery container according to claim 1,
wherein a front end and a rear end of the blocking barrier are in contact with a front inner surface and a rear inner surface of the container housing, respectively.

9. The battery container according to claim 1,
wherein the blocking barrier has an inclined surface that is inclined toward the module stack as moving outward in a front and rear direction.

10. An energy storage system, comprising the battery container according to any one of claims 1 to 9.

## Patentansprüche

1. Batteriecontainer, umfassend:
ein Containergehäuse (100) mit einem darin ausgebildeten Leerraum;
eine Vielzahl von Batteriemodulen (200), die im Innenraum des Containergehäuses untergebracht und in einer oberen und unteren Richtung gestapelt sind, um einen Modulstapel (S1-S14) zu bilden, so dass eine Vielzahl von Modulstapeln in einer horizontalen Richtung angeordnet ist;
**dadurch gekennzeichnet, dass** der Batteriecontainer eine Sperrbarriere (300) umfasst, die zwischen mindestens einigen Modulstapeln aus der Vielzahl von Modulstapeln eingefügt und so konfiguriert ist, dass sie den Raum zwischen den Modulstapeln trennt.

2. Batteriecontainer nach Anspruch 1, wobei die Sperrbarriere ein oberes Ende, das an einer Oberseite des Containergehäuses befestigt ist, und ein unteres Ende, das an einer Unterseite des Containergehäuses befestigt ist, aufweist.

3. Batteriecontainer nach Anspruch 1, wobei die Sperrbarriere einen Plattenabschnitt aufweist, der so angeordnet ist, dass er aufrecht zwischen zwei benachbarten Modulstapeln steht, so dass beide Flächen unterschiedlichen Modulstapeln zugewandt sind.

4. Batteriecontainer nach Anspruch 3, wobei der Plattenabschnitt zwei Platten (310) enthält, die voneinander beabstandet sind.

5. Batteriecontainer nach Anspruch 3, wobei die Sperrbarriere einen ersten Säulenabschnitt (320) aufweist, der den Plattenabschnitt stützt.

6. Batteriecontainer nach Anspruch 1, wobei die Sperrbarriere einen ersten Auflageabschnitt (330) aufweist, der so konfiguriert ist, dass er das Batteriemodul stützt.

7. Batteriecontainer nach Anspruch 1, wobei zwei oder mehr Sperrbarrieren enthalten sind, und der Batteriecontainer ferner eine Stützwand (400) enthält, die zwischen zwei Sperrbarrieren vorgesehen und so konfiguriert ist, dass sie das Batteriemodul zusammen mit den Sperrbarrieren stützt.

8. Batteriecontainer nach Anspruch 1, wobei ein vorderes Ende und ein hinteres Ende der Sperrbarriere jeweils mit einer vorderen Innenfläche und einer hinteren Innenfläche des Containergehäuses in Kontakt stehen.

9. Batteriecontainer nach Anspruch 1, wobei die Sperrbarriere eine geneigte Fläche aufweist, die zum Modulstapel hin geneigt ist, wenn sie sich in einer vorderen und hinteren Richtung nach außen bewegt.

10. Energiespeichersystem, umfassend den Batteriecontainer nach einem der Ansprüche 1 bis 9.

## Revendications

1. Conteneur de batterie, comprenant :
un boîtier de conteneur (100) présentant un espace vide formé à l'intérieur de celui-ci ;
une pluralité de modules de batterie (200) logés dans l'espace intérieur du boîtier de conteneur et empilés dans une direction supérieure et inférieure pour former un empilement de modules (S1-S14), de sorte qu'une pluralité d'empilements de modules soient agencées dans une direction horizontale ;
**caractérisé en ce que** le conteneur de batterie comprend une barrière de blocage (300) interposée entre au moins certains empilements de modules parmi la pluralité d'empilements de modules et configurée pour séparer l'espace entre les empilements de modules.

2. Le conteneur de batterie selon la revendication 1, dans lequel la barrière de blocage a une extrémité supérieure fixée à un côté supérieur du boîtier de conteneur et une extrémité inférieure fixée à un côté inférieur du boîtier de conteneur.

3. Le conteneur de batterie selon la revendication 1, dans lequel la barrière de blocage a une partie de plaque disposée de manière à être dressée entre deux empilements de modules adjacents de sorte que les deux surfaces fassent face à des empilements de modules différents.

4. Le conteneur de batterie selon la revendication 3, dans lequel la partie de plaque inclut deux plaques (310) espacées l'une de l'autre.

5. Le conteneur de batterie selon la revendication 3, dans lequel la barrière de blocage a une première partie de pilier (320) qui supporte la partie de plaque.

6. Le conteneur de batterie selon la revendication 1, dans lequel la barrière de blocage a une première partie d'assise (330) configurée pour supporter le module de batterie.

7. Le conteneur de batterie selon la revendication 1, dans lequel deux barrières de blocage ou plus sont incluses, et le conteneur de batterie inclut en outre une paroi de support (400) prévue entre deux barrières de blocage et configurée pour supporter le module de batterie conjointement avec les barrières de blocage.

8. Le conteneur de batterie selon la revendication 1, dans lequel une extrémité avant et une extrémité arrière de la barrière de blocage sont en contact avec une surface intérieure avant et une surface intérieure arrière du boîtier de conteneur, respectivement.

9. Le conteneur de batterie selon la revendication 1, dans lequel la barrière de blocage a une surface inclinée qui est inclinée vers l'empilement de modules en se déplaçant vers l'extérieur dans une direction avant et arrière.

10. Système de stockage d'énergie, comprenant le conteneur de batterie selon l'une quelconque des revendications 1 à 9.
